# EUROPEAN PATENT SPECIFICATION

(11) **EP 2 822 236 B1**
(45) Date of publication and mention of the grant of the patent: **16.05.2018**
(21) Application number: 13829266.9
(22) Date of filing: 14.08.2013
(51) Int. Cl.: H04L 12/70, G06F 9/48, H04L 29/08, H04L 12/24, G06F 9/50, H04W 72/10, H04L 12/927, H04W 72/04

(54) **NETWORK BANDWIDTH DISTRIBUTION METHOD AND TERMINAL**
NETZWERKBANDBREITENVERTEILUNGSVERFAHREN UND ENDGERÄT
PROCÉDÉ ET TERMINAL DE DISTRIBUTION DE LARGEUR DE BANDE DE RÉSEAU

(30) Priority: 14.08.2012 CN 201210288295
(43) Date of publication of application: 07.01.2015
(73) Proprietor: Huawei Device Co., Ltd., Longgang District Shenzhen Guangdong 518129 (CN)
(72) Inventor: ZHAO, Jichang, Shenzhen Guangdong 518129 (CN)
(74) Representative: Körber, Martin Hans
(86) International application number: PCT/CN2013/081483
(87) International publication number: WO 2014/026613

(56) References cited:
- WO-A2-2010/039023
- CN-A- 102 209 107
- CN-A- 102 239 668
- CN-A- 102 547 417
- CN-A- 102 577 264
- CN-A- 102 791 032
- GB-A- 2 381 996

## Description

### TECHNICAL FIELD

The present invention relates to the field of resource allocation technologies, and in particular, to a network bandwidth allocation method and terminal, and belongs to the field of communications technologies.

### BACKGROUND

As a smartphone constantly becomes more intelligent, a function of the smartphone has currently been similar to that of a small handheld computer, and is capable of supporting running of various application programs that occupy network resources. However, because the development of wireless networks lags behind a popularization speed of smartphones, network bandwidth available for the smartphones is limited. Therefore, when a smartphone runs a plurality of application programs that need to occupy network resources, uplink and downlink network speeds of the applications may not be ensured.

For the limited available network bandwidth, the application programs that run on the smartphone and occupy network resources randomly preempt the network bandwidth. Generally, when a smartphone runs an application program that occupies a network resource, the terminal sends a service request to an application server corresponding to the application program, so that the application server provides a service in response to the service request. After the terminal sends service requests to different application servers corresponding to a plurality of application programs, the available network bandwidth is preferentially allocated to an application program that has received a response message returned by an application server. Therefore, in the prior art, when a smartphone runs a plurality of application programs that need to occupy network resources, network bandwidth occupied by each application program depends on a responding speed of an application server corresponding to the application program. For example, when the smartphone runs both QQ and Thunder, a server of Tencent has a higher responding speed, and a file server on which a file being downloaded by Thunder is located has a lower responding speed; therefore, QQ occupies more network bandwidth, and Thunder occupies less network bandwidth.
GB 2 381 996 A discloses a network bandwidth optimization method is disclosed. The method comprises receiving a request from an application to provide to the application network service on a network. The method comprises automatically allocating the application a channel on the network to provide network service in response to a quality of service parameter if sufficient bandwidth exists on the network.

WO 2010 039 023 A2 discloses a resource reservation method in a network, where the allocation of network bandwidth to each application connected to the network is determined by the end user is provided herewith.

### SUMMARY

For disadvantages existing in the prior art, embodiments of the present invention provide a network bandwidth allocation method and terminal, so as to implement proper network bandwidth allocation according to a user requirement for an application program running on a terminal.

According to a first aspect, a network bandwidth allocation method is provided according to claim 1.

Possible implementation manners of the first aspect are provided according to claims 2 and 3.

According to a second aspect, a terminal is provided according to claim 4.

Possible implementation manners of the second aspect are provided according to claims 5 and 6.

According to the network bandwidth allocation method and terminal provided in the embodiments of the present invention, network bandwidth is allocated to an application program according to a priority of each application program that needs to be allocated with network bandwidth, currently available network bandwidth of a terminal, and a preset network bandwidth allocation policy. This implements proper network bandwidth allocation according to a user requirement for an application program running on the terminal, so that in a relatively poor network environment, proper running of an application program with a higher priority can also be ensured according to a user requirement, thereby avoiding a problem that application programs cannot run properly due to free preemption of network bandwidth by the application programs, or a corresponding application program cannot run according to a user requirement.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a network bandwidth allocation method according to an embodiment of the present invention;
FIG. 2 is a schematic flowchart of a network bandwidth allocation method according to another embodiment of the present invention;
FIG. 3 is a schematic flowchart of a network bandwidth allocation method according to still another embodiment of the present invention;
FIG. 4 is a schematic structural diagram of a terminal according to an embodiment of the present invention; and
FIG. 5 is a schematic structural diagram of a terminal according to another embodiment of the present invention.

### DESCRIPTION OF EMBODIMENTS

In a current mobile phone, there is no mechanism for performing coordinating allocation processing on network bandwidth occupied by application programs, and various application programs connected to a network obtain what they need based on a preemption method. Therefore, when a smartphone runs a plurality of application programs connected to a network, user network experience of each application program is uncertain. For example, during a process in which a user is refreshing a microblog, a program in the background is accessing a server for updating weather information, a Google account is synchronizing account information, and background online music is in a music buffering process. The application programs preempt network bandwidth, which may cause that each application occupies a small amount of network bandwidth, and minimum bandwidth required to support the application programs is not reached. As a result, song buffering fails, a microblog cannot be refreshed, and so on, so that a user requirement cannot be met.

In this embodiment, the network bandwidth allocation method may be executed by a terminal, and the terminal may be, for example, a smartphone or a personal computer.

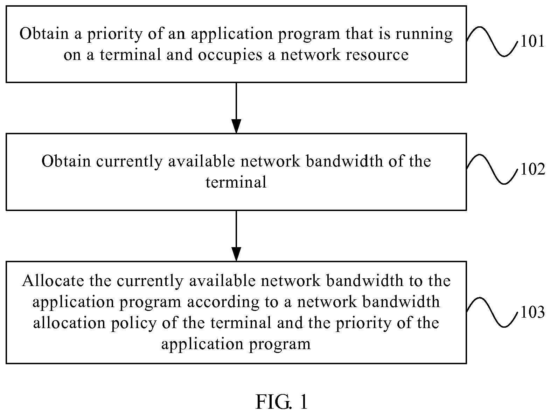

FIG. 1 is a schematic flowchart of a network bandwidth allocation method according to an embodiment of the present invention. As shown in FIG. 1, the network bandwidth allocation method includes the following procedure:

101. Obtain a priority of an application program that is running on a terminal and occupies a network resource.

Specifically, a priority list is, for example, pre-configured on the terminal. The terminal learns, according to the priority list, a priority of an application program that currently runs and is connected to a network. The terminal may determine the priority of the application program according to the priority list in any manner. For example, the priority list stores a mapping relationship that is between an identifier of each application program and a priority and established according to a user requirement. The terminal queries the priority list according to an identifier of the application program that currently runs and is connected to a network, so as to determine the priority of the application program. The priority list may further store a mapping relationship that is between a type of an application program and a priority and established according to a user requirement. The terminal classifies, according to a service feature, a running status, or the like of the application program, the application program that currently runs and is connected to a network, and queries the priority list for a priority corresponding to the classification, so as to determine the priority of the application program. In this embodiment, no limitation is set to a specific manner of obtaining a priority of an application program that runs on a terminal and is connected to a network.

102. Obtain currently available network bandwidth of the terminal.

Specifically, the terminal may obtain the currently available network bandwidth by using any network bandwidth obtaining manner in the prior art, which is not limited in this embodiment. More specifically, the terminal may be set to continuously monitoring available network bandwidth according to an actual requirement; the terminal may also be set, according to a requirement such as power saving, to obtaining network bandwidth available for the terminal when the network bandwidth allocation method in this embodiment is executed; and_the terminal may further be set to obtaining network bandwidth available for the terminal when a network status changes.

103. Allocate the currently available network bandwidth to the application program according to a network bandwidth allocation policy of the terminal and the priority of the application program.

Specifically, the terminal is further pre-configured with one or more network bandwidth allocation policies. When a plurality of network bandwidth allocation policies are configured, the terminal may automatically select a relatively optimized network bandwidth allocation policy according to current network bandwidth; or a user may select a currently applied network bandwidth allocation policy according to a requirement. After the terminal obtains the priority of the application program that currently runs and is connected to a network and the currently available network bandwidth of the terminal, in combination with the currently applied network bandwidth allocation policy, network bandwidth is allocated to the application program connected to a network, so as to preferentially allocate sufficient bandwidth to an application program with a higher priority, and ensure that the application program with a higher priority can run properly.

According to the network bandwidth allocation method in this embodiment, network bandwidth is allocated to an application program according to a priority of each application program that needs to be allocated with network bandwidth, currently available network bandwidth of a terminal, and a preset network bandwidth allocation policy. This implements proper network bandwidth allocation according to a user requirement for an application program running on the terminal, so that in a relatively poor network environment, proper running of an application program with a higher priority can also be ensured according to a user requirement, thereby avoiding a problem that application programs cannot run properly due to free preemption of network bandwidth by the application programs, or a corresponding application program cannot run according to a user requirement.

On a basis of the foregoing embodiment, according to the network bandwidth allocation method in this embodiment, a process of obtaining a priority of an application program that is running on a terminal and occupies a network resource is described.

Specifically, the obtaining a priority of an application program that is running on a terminal and occupies a network resource specifically includes:

classifying the application program according to a running status of the application program that is running on the terminal and connected to a network; and

determining the priority of the application program according to a mapping relationship that is between an application program classification and a priority and stored in the preset priority list.

More specifically, the running status of the application program includes, for example, foreground running, background running, and hidden running. Correspondingly, a type of an application program classified according to the running status includes, for example, a foreground program, a background service, and a hidden program. For example, on a terminal, Tencent microblog is displayed at the forefront, and a corresponding classification is a foreground program; a weather clock updates weather information in the background, and a corresponding classification is a background service; a "music player" is hidden in the background for online playing, and a corresponding classification is a hidden program.

Correspondingly, the terminal determines a priority of each application program according to a priority list that stores a mapping relationship between the foregoing classifications and a priority. For example, the priority list may be a priority list set in an existing Android (Android) system for managing memory. Table 1 is an example of a priority list set in an Android system for managing memory. In Table 1, as a value of "oom_adj" decreases, it indicates that a priority of the application program is higher. In Table 1, the following case is used as an example: Only four types, that is, a foreground program, a user-visible program, a background service, and a hidden program, relate to network connection and need to be allocated with network bandwidth. The foreground program has the highest priority, a priority of the user-visible program is lower than that of the foreground program, a priority of the background service is lower than that of the user-visible program and higher than that of the hidden program, and the hidden program has the lowest priority.

**Table 1**

| **Classification name** | **oom_adj** | **Explanation** |
|---|---|---|
| FOREGROUD_APP | 0 | Foreground program |
| VISIBLE_APP | 1 | User-visible program |
| SECONDARY_SERVER | 2 | Background service |
| HOME_APP | 4 | Main interface |
| HIDDEN_APP | 7 | Hidden program |
| CONTENT_ PROVIDER | 14 | Content provider |
| EMPTY_APP | 15 | Empty program, providing neither a service nor content |

According to the network bandwidth allocation method in this embodiment, a priority of an application program is dynamically determined according to a running status of the application program, so that smooth running of an application program that runs in the foreground can be ensured and a user requirement under a conventional condition can be met. Moreover, by using a priority list set in an Android system for managing memory, when a terminal that executes the embodiment of the present invention is a smart terminal with an Android system, no priority list for allocating network bandwidth needs to be additionally set, which effectively saves a system resource of the terminal.

Further, in the network bandwidth allocation method in the foregoing embodiment, after the determining the priority of the application program according to a mapping relationship that is between an application program classification and a priority and stored in the preset priority list, the method further includes:
if a priority not corresponding to the application program that is running on the terminal and occupies a network resource exists in the priority list, sequentially increasing the priority of the application program that is running on the terminal and has a priority lower than the priority not corresponding to the application program that is running on the terminal and occupies a network resource, and allocating network bandwidth according to an increased priority of the application program.

Specifically, for example, currently, no foreground program is running on the terminal, but only the user-visible program, the background service, and the hidden program run; then after priorities of the user-visible program, the background service, and the hidden program are determined according to the mapping relationship between an application type and a priority that is shown in Table 1, the priorities are increased sequentially, that is, the priority corresponding to the user-visible program is increased to the priority corresponding to the foreground program, and the priority corresponding to the hidden program is increased to the priority corresponding to the background service. Moreover, when network bandwidth allocation is subsequently performed according to a priority, network bandwidth is allocated to each application program according to an increased priority.

According to the network bandwidth allocation method in the foregoing embodiment, when the terminal runs no application program with a higher priority, by increasing a priority, network bandwidth can be sufficiently allocated to an application program with a lower priority that is running on a terminal, so that the network bandwidth can be fully used and network bandwidth waste resulting from network bandwidth reservation for an application program with a higher priority can be avoided.

On a basis of the foregoing embodiment, according to the network bandwidth allocation method in this embodiment, a process of allocating network bandwidth according to a priority of an application program and according to a network bandwidth allocation policy and currently available network bandwidth is extendedly described.

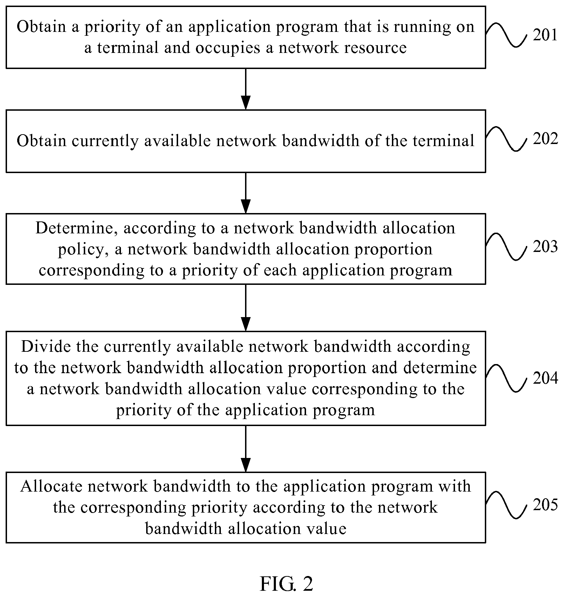

FIG. 2 is a schematic flowchart of a network bandwidth allocation method according to another embodiment of the present invention. As shown in FIG. 2, the method includes the following procedure:
201. Obtain a priority of an application program that is running on a terminal and occupies a network resource.
202. Obtain currently available network bandwidth of the terminal.
203. Determine, according to a network bandwidth allocation policy, a network bandwidth allocation proportion corresponding to a priority of each application program.

Specifically, for example, the network bandwidth allocation policy is specifically: allocating different proportions of network bandwidth to application programs with different priorities (where this network bandwidth allocation policy is referred to as, for example, a first network bandwidth allocation policy). More specifically, for example, 80% of the currently available network bandwidth is allocated to a foreground program, 10% of the currently available network bandwidth is allocated to a user-visible program, 7% of the currently available network bandwidth is allocated to a background service, and 3% of the currently available network bandwidth is allocated to a hidden program.

204. Divide the currently available network bandwidth according to the network bandwidth allocation proportion and determine a network bandwidth allocation value corresponding to the priority of the application program.

For example, the currently available network bandwidth of the terminal is 200 KB/S. According to the first network bandwidth allocation policy, it is determined that a network bandwidth allocation value corresponding to the foreground program is 160 KB/S, a network bandwidth allocation value corresponding to the user-visible program is 20 KB/S, a network bandwidth allocation value corresponding to the background service is 14 KB/S, and a network bandwidth allocation value corresponding to the hidden program is 6 KB/S.

205. Allocate network bandwidth to the application program with the corresponding priority according to the network bandwidth allocation value.

Specifically, if the number of application programs that run on the terminal and are corresponding to each priority is one, a network bandwidth allocation value corresponding to the priority is fully allocated to the application program; if the number of application programs that run on the terminal and are corresponding to each priority is more than one, for example, both QQ and MSN run on the terminal in the background, the terminal may evenly allocate the network bandwidth of 14 KB/S corresponding to the background service to QQ and MSN; alternatively, the network bandwidth of 14 KB/S may be shared by QQ and MSN, and the shared network bandwidth is preempted by QQ and MSN.

Further, in combination with the first network bandwidth allocation policy in this embodiment, the allocating network bandwidth to each application program according to an increased priority in the another embodiment is described by using an example.

For example, currently, no foreground program is running on the terminal, but only the user-visible program, the background service, and the hidden program run; then when network bandwidth allocation is performed according to the first network bandwidth allocation policy, a network bandwidth of 160 KB/S is allocated to the user-visible program that currently runs on the terminal, a network bandwidth of 20 KB/S is allocated to the background service, and a network bandwidth of 14 KB/S is sequentially increased, and network bandwidth is allocated to each application program according to an increased priority, so that massive waste of network bandwidth is avoided, and a user-visible program with a lower priority can obtain a large amount of network bandwidth resources to run properly.

On a basis of the foregoing embodiment, in the network bandwidth allocation method in this embodiment, network bandwidth allocation performed based on another network bandwidth allocation policy is extendedly described.

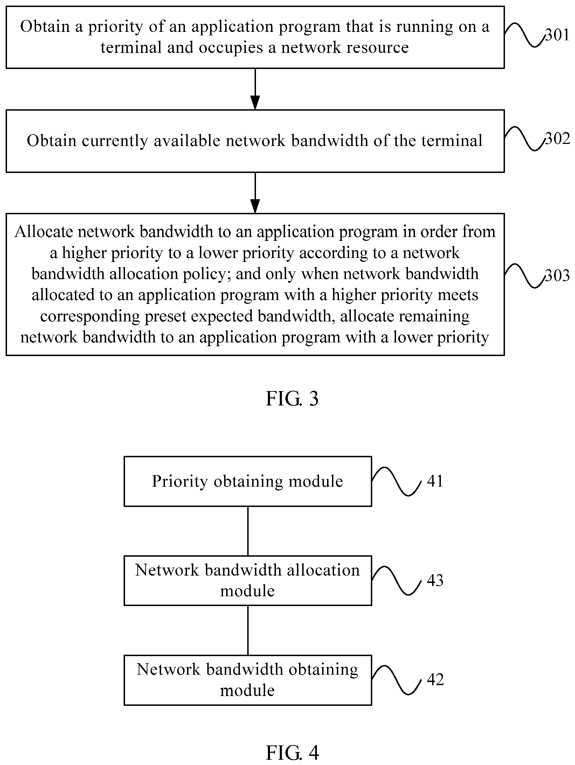

FIG. 3 is a schematic flowchart of a network bandwidth allocation method according to still another embodiment of the present invention. As shown in FIG. 3, the method includes the following procedure:
301. Obtain a priority of an application program that is running on a terminal and occupies a network resource.
302. Obtain currently available network bandwidth of the terminal.
303. Allocate network bandwidth to an application program in order from a higher priority to a lower priority according to a network bandwidth allocation policy (which is referred to as, for example, a second network bandwidth allocation policy); and only when network bandwidth allocated to an application program with a higher priority meets corresponding preset expected bandwidth, allocate remaining network bandwidth to an application program with a lower priority.

Specifically, the second network bandwidth allocation policy includes, for example, an expected bandwidth value corresponding to each priority. The terminal first compares the currently available network bandwidth with an expected bandwidth value corresponding to the highest priority. If the currently available network bandwidth is less than or equal to the expected bandwidth value corresponding to the highest priority, the currently available network bandwidth is fully allocated to an application program with the highest priority; and if the currently available network bandwidth is greater than the expected bandwidth value corresponding to the highest priority, network bandwidth is allocated to an application program with the highest priority according to the expected bandwidth value corresponding to the highest priority, and in a similar manner, remaining available network bandwidth is allocated to an application program with another priority, where: remaining available network bandwidth = currently available network bandwidth - allocated available network bandwidth (that is, the expected bandwidth value corresponding to the highest priority).

For example, an expected bandwidth value corresponding to a foreground program is 100 KB/S, an expected bandwidth value corresponding to a user-visible program is 150 KB/S, an expected bandwidth value corresponding to a background service and a hidden program each is 120 KB/S, and the currently available network bandwidth detected by the terminal is 200 KB/S. The terminal allocates a network bandwidth of 100 KB/S to the foreground program, allocates a network bandwidth of 100 KB/S to the user-visible program, and allocates no network bandwidth to the background service and the hidden program.

According to the network bandwidth allocation method in this embodiment, when currently available network bandwidth of a terminal meets an expected bandwidth value corresponding to an application program with a higher priority, network bandwidth is allocated according to the expected bandwidth value corresponding to the application program with a higher priority. This fully ensuring running smoothness of the application program with a higher priority and improving user experience.

Further, in combination with the second network bandwidth allocation policy in this embodiment, the allocating network bandwidth to each application program according to an increased priority in the another embodiment is described by using an example.

For example, currently, no foreground program is running on the terminal, but only the user-visible program, the background service, and the hidden program run; then when network bandwidth allocation is performed according to the second network bandwidth allocation policy, a network bandwidth of 150 KB/S is allocated to the user-visible program that currently runs on the terminal, and a network bandwidth of 50 KB/S is allocated to the background service.

It can be seen that, in the example, a priority is sequentially increased, and network bandwidth is allocated to each application program according to an increased priority, so that massive waste of network bandwidth is avoided, and a user-visible program with a lower priority can run smoothly.

FIG. 4 is a schematic structural diagram of a terminal according to an embodiment of the present invention. As shown in FIG. 4, the terminal includes a priority obtaining module 41, a network bandwidth obtaining module 42, and a network bandwidth allocation module 43, where:
the priority obtaining module 41 is configured to obtain a priority of an application program that is running on the terminal and occupies a network resource, and provide the priority of the application program that is running on the terminal and occupies a network resource to the network bandwidth allocation module 43;
the network bandwidth obtaining module 42 is configured to obtain currently available network bandwidth of the terminal, and provide the currently available network bandwidth to the network bandwidth allocation module 43; and
the network bandwidth allocation module 43 is configured to allocate the currently available network bandwidth to the application program according to a network bandwidth allocation policy of the terminal and the priority of the application program.

A specific procedure for performing network bandwidth allocation by the terminal in this embodiment is the same as the network bandwidth allocation method according to any one of the foregoing embodiments, and therefore is not repeatedly described herein.

According to the terminal in this embodiment, network bandwidth is allocated to an application program according to a priority of each application program that needs to be allocated with network bandwidth, currently available network bandwidth of a terminal, and a preset network bandwidth allocation policy. This implements proper network bandwidth allocation according to a user requirement for an application program running on the terminal, so that in a relatively poor network environment, proper running of an application program with a higher priority can also be ensured according to a user requirement, thereby avoiding a problem that application programs cannot run properly due to free preemption of network bandwidth by the application programs, or a corresponding application program cannot run according to a user requirement.

Further, according to the terminal in the foregoing embodiment, the priority obtaining module41 is specifically configured to: classify the application program according to a running status of the application program that is running on the terminal and occupies a network resource; and determine the priority of the application program according to a mapping relationship that is between an application program classification and a priority and stored in a preset priority list.

According to the terminal in this embodiment, a priority of an application program is dynamically determined according to a running status of the application program, so that smooth running of an application program that runs in the foreground can be ensured and a user requirement under a conventional condition can be met. Moreover, by using a priority list set in an Android system for managing memory, when a terminal that executes the embodiment of the present invention is a smart terminal with an Android system, no priority list for allocating network bandwidth needs to be additionally set, which effectively saves a system resource of the terminal.

Further, according to the terminal in the foregoing embodiment, the priority obtaining module is further configured to: if a priority not corresponding to the application program that is running on the terminal and occupies a network resource exists in the priority list, sequentially increase the priority of the application program that is running on the terminal and has a priority lower than the priority not corresponding to the application program that is running on the terminal and occupies a network resource, and allocate network bandwidth according to an increased priority of the application program.

According to the terminal in this embodiment, when the terminal runs no application program with a higher priority, by increasing a priority, network bandwidth can be sufficiently allocated to an application program with a lower priority that is running on a terminal, so that the network bandwidth can be fully used and network bandwidth waste resulting from network bandwidth reservation for an application program with a higher priority can be avoided.

Further, according to the terminal in the foregoing embodiment, the network bandwidth allocation policy is specifically: allocating different proportions of network bandwidth to application programs with different priorities; and correspondingly, the network bandwidth allocation module is specifically configured to: determine, according to the network bandwidth allocation policy, a network bandwidth allocation proportion corresponding to a priority of each of the application programs; divide the currently available network bandwidth according to the network bandwidth allocation proportion and determine a network bandwidth allocation value corresponding to the priority of the application program; and allocate network bandwidth to the application program with the corresponding priority according to the network bandwidth allocation value.

Further, according to the terminal in the foregoing embodiment, the network bandwidth allocation policy is specifically: allocating network bandwidth to an application program in order from a higher priority to a lower priority, and only when network bandwidth allocated to an application program with a higher priority meets corresponding preset expected bandwidth, allocating remaining network bandwidth to an application program with a lower priority.

According to the terminal in this embodiment, when currently available network bandwidth of the terminal meets an expected bandwidth value corresponding to an application program with a higher priority, network bandwidth is allocated according to the expected bandwidth value corresponding to the application program with a higher priority. This fully ensuring running smoothness of the application program with a higher priority and improving user experience.

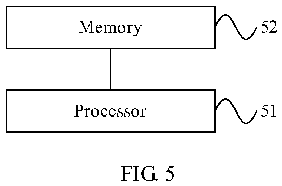

FIG. 5 is a schematic structural diagram of a terminal according to another embodiment of the present invention. As shown in FIG. 5, the terminal includes a processor 51 and a memory 52, where:
the memory 52 is configured to store a mapping relationship between an application program of the terminal and a priority; and
the processor 51 is configured to obtain a priority of an application program that is running on the terminal and occupies a network resource and query the memory 52 to obtain the priority of the application program that is running on the terminal and occupies a network resource; obtain currently available network bandwidth of the terminal; and allocate the currently available network bandwidth to the application program according to a network bandwidth allocation policy of the terminal and the priority of the application program.

The processor 51 is implemented by means of hardware by using, for example, any central processing unit (Central Processing Unit, CPU); and the memory 52 is implemented by means of hardware by using, for example, any read-only memory (Read-Only Memory, ROM) or random access memory (Random Access Memory, RAM).

A specific procedure for performing network bandwidth allocation by the terminal in this embodiment is the same as the network bandwidth allocation method according to any one of the foregoing embodiments, and therefore is not repeatedly described herein.

According to the terminal in this embodiment, network bandwidth is allocated to an application program according to a priority of each application program that needs to be allocated with network bandwidth, currently available network bandwidth of a terminal, and a preset network bandwidth allocation policy. This implements proper network bandwidth allocation according to a user requirement for an application program running on the terminal, so that in a relatively poor network environment, proper running of an application program with a higher priority can also be ensured according to a user requirement, thereby avoiding a problem that application programs cannot run properly due to free preemption of network bandwidth by the application programs, or a corresponding application program cannot run according to a user requirement.

Based on the description of the foregoing implementation manners, it may be clearly understood by persons skilled in the art that the present invention may be implemented by using hardware, firmware, or a combination of the two. When the present invention is implemented by using software, the foregoing functions may be stored in a computer readable medium or serve as one or more instructions or code on the computer readable medium for transmission. The computer readable medium includes a computer storage medium and a communication medium, where the communication medium includes any medium for conveniently transmitting computer programs from one place to another place. The storage medium may be any available medium that a computer can access. For example, the computer readable medium may include but is not limited to: a RAM, a ROM, an EEPROM, a CD-ROM, or other optical disk storage; magnetic disk storage media or other magnetic storage devices; or any other computer accessible media that can be used to carry or store desired program code in a form of an instruction or a data structure. In addition, any connection may become a computer readable medium properly. For example, if software is transmitted from a website, a server, or other remote sources by using a coaxial cable, an optical cable, a twisted pair cable, or a digital subscriber line (DSL), or a wireless technology such as infrared, radio, and microwave, the coaxial cable, optical cable, twisted pair cable, DSL, or wireless technology such as infrared, radio, and microwave is included in the fixing of the medium. As used in the present invention, the disk (Disk) and disc (disc) include a compact disc (CD), a laser disc, an optical disc, a digital versatile disc (DVD), a floppy disk, and a blue-ray disc, where the disk is usually used to replicate data magnetically, and the disc uses laser to replicate data optically. A combination of the foregoing shall also fall within the protection scope of the computer readable medium.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments.

## Claims

1. A network bandwidth allocation method, comprising:
obtaining (301) a priority of each application program that is running on a terminal and occupies a network resource; and obtaining (302) currently available network bandwidth of the terminal;
the method being **characterized in that** it comprises allocating (303) the currently available network bandwidth to the application programs running on the terminal in order from a higher priority to a lower priority according to a network bandwidth allocation policy, and only when network bandwidth allocated to an application program with a higher priority meets a corresponding preset expected bandwidth, allocating remaining network bandwidth to an application program with a lower priority.

2. The network bandwidth allocation method according to claim 1, wherein the obtaining (301) a priority of each application program that is running on a terminal and occupies a network resource specifically comprises:
classifying each application program according to a running status of the application program that is running on the terminal and occupies a network resource; and
determining the priority of each application program according to a mapping relationship that is between an application program classification and a priority and stored in a preset priority list.

3. The network bandwidth allocation method according to claim 1 or 2, wherein the network bandwidth allocation policy is specifically: allocating different proportions of network bandwidth to application programs with different priorities; and correspondingly,
the allocating the currently available network bandwidth to the application programs according to a network bandwidth allocation policy of the terminal and the priority of the application program specifically comprises:
determining, according to the network bandwidth allocation policy, a network bandwidth allocation proportion corresponding to the priority of each of the application programs;
dividing the currently available network bandwidth according to the network bandwidth allocation proportion and determining a network bandwidth allocation value corresponding to the priority of each of the application program; and
allocating network bandwidth to the application program with the corresponding priority according to the network bandwidth allocation value.

4. A terminal, comprising a priority obtaining module, a network bandwidth obtaining module, and a network bandwidth allocation module, wherein:
the priority obtaining module (41) is configured to obtain a priority of each application program that is running on the terminal and occupies a network resource, and provide the priorities to the network bandwidth allocation module; and the network bandwidth obtaining module (42) is configured to obtain currently available network bandwidth of the terminal, and provide the currently available network bandwidth to the network bandwidth allocation module;
the terminal being **characterized in that** the network bandwidth allocation module (43) is configured to allocate the currently available network bandwidth to the application programs running on the terminal in order from a higher priority to a lower priority according to a network bandwidth allocation policy, and only when network bandwidth allocated to an application program with a higher priority meets a corresponding preset expected bandwidth, allocate remaining network bandwidth to an application program with a lower priority.

5. The terminal according to claim 4, wherein the priority obtaining module (41) is specifically configured to: classify each application program according to a running status of the application program that is running on the terminal and occupies a network resource; and determine the priority of each application program according to a mapping relationship that is between an application program classification and a priority and stored in a preset priority list.

6. The terminal according to claim 4 or 5, wherein the network bandwidth allocation policy is specifically: allocating different proportions of network bandwidth to application programs with different priorities; and correspondingly, the network bandwidth allocation module is specifically configured to: determine, according to the network bandwidth allocation policy, a network bandwidth allocation proportion corresponding to the priority of each of the application programs; divide the currently available network bandwidth according to the network bandwidth allocation proportion and determine a network bandwidth allocation value corresponding to the priority of each of the application program; and allocate network bandwidth to the application program with the corresponding priority according to the network bandwidth allocation value.

## Patentansprüche

1. Verfahren zur Zuweisung von Netzwerkbandbreite, umfassend:
Abrufen (301) einer Priorität jedes Anwendungsprogramms, das auf einem Endgerät ausgeführt wird und eine Netzwerkressource belegt; und
Abrufen (302) von gegenwärtig verfügbarer Netzwerkbandbreite des Endgeräts;
wobei das Verfahren **dadurch gekennzeichnet ist, dass** es umfasst:
Zuweisen (303) der gegenwärtig verfügbaren Netzwerkbandbreite zu den Anwendungsprogrammen, die auf dem Endgerät ausgeführt werden, in einer Reihenfolge von einer höheren Priorität zu einer niedrigeren Priorität gemäß einer Netzwerkbandbreiten-Zuweisungsrichtlinie und Zuweisen von restlicher Netzwerkbandbreite zu einem Anwendungsprogramm mit einer niedrigeren Priorität nur dann, wenn Netzwerkbandbreite, die einem Anwendungsprogramm mit einer höheren Priorität zugewiesen ist, einer entsprechenden voreingestellten erwarteten Bandbreite entspricht.

2. Verfahren zur Zuweisung von Netzwerkbandbreite nach Anspruch 1, wobei das Abrufen (301) einer Priorität jedes Anwendungsprogramms, das auf einem Endgerät ausgeführt wird und eine Netzwerkressource belegt, insbesondere umfasst:
Klassifizieren jedes Anwendungsprogramms gemäß einem Ausführungsstatus des Anwendungsprogramms, das auf dem Endgerät ausgeführt wird und eine Netzwerkressource belegt; und
Bestimmen der Priorität jedes Anwendungsprogramms gemäß einer Zuordnungsbeziehung, die zwischen einer Anwendungsprogrammklassifizierung und
einer Priorität besteht und in einer voreingestellten Prioritätsliste gespeichert ist.

3. Verfahren zur Zuweisung von Netzwerkbandbreite nach Anspruch 1 oder 2, wobei es sich bei der Netzwerkbandbreiten-Zuweisungsrichtlinie insbesondere handelt um:
Zuweisen verschiedener Anteile von Netzwerkbandbreite zu Anwendungsprogrammen mit verschiedenen Prioritäten; und dementsprechend das Zuweisen der gegenwärtig verfügbaren Netzwerkbandbreite zu den Anwendungsprogrammen gemäß einer Netzwerkbandbreiten-Zuweisungsrichtlinie des Endgeräts und der Priorität des Anwendungsprogramms insbesondere umfasst:
Bestimmen gemäß der Netzwerkbandbreiten-Zuweisungsrichtlinie eines Netzwerkbandbreiten-Zuweisungsanteils, welcher der Priorität eines jeden der Anwendungsprogramme entspricht;
Teilen der gegenwärtig verfügbaren Netzwerkbandbreite gemäß dem Netzwerkbandbreiten-Zuweisungsanteil und Bestimmen eines Netzwerkbandbreiten-Zuweisungswerts, welcher der Priorität eines jeden der Anwendungsprogramme entspricht; und
Zuweisen von Netzwerkbandbreite zum Anwendungsprogramm mit der entsprechenden Priorität gemäß dem Netzwerkbandbreiten-Zuweisungswert.

4. Endgerät, umfassend ein Prioritätenabrufmodul, ein Netzwerkbandbreiten-Abrufmodul und ein Netzwerkbandbreiten-Zuweisungsmodul, wobei:
das Prioritätenabrufmodul (41) so konfiguriert ist, dass es eine Priorität jedes Anwendungsprogramms abruft, das auf dem Endgerät ausgeführt wird und eine Netzwerkressource belegt, und die Prioritäten für das Netzwerkbandbreiten-Zuweisungsmodul bereitstellt; und
das Netzwerkbandbreiten-Abrufmodul (42) so konfiguriert ist, dass es gegenwärtig verfügbare Netzwerkbandreite des Endgeräts abruft, und die gegenwärtig verfügbare Netzwerkbandbreite für das Netzwerkbandbreiten-Zuweisungsmodul bereitstellt;
das Endgerät **dadurch gekennzeichnet ist, dass**:
das Netzwerkbandbreiten-Zuweisungsmodul (43) so konfiguriert ist, dass es die gegenwärtig verfügbare Netzwerkbandbreite den Anwendungsprogrammen, die auf dem Endgerät ausgeführt werden, in einer Reihenfolge von einer höheren Priorität zu einer niedrigeren Priorität gemäß einer Netzwerkbandbreiten-Zuweisungsrichtlinie zuweist und restliche Netzwerkbandbreite nur dann einem Anwendungsprogramm mit einer niedrigeren Priorität zuweist, wenn Netzwerkbandbreite, die einem Anwendungsprogramm mit einer höheren Priorität zugewiesen ist, einer entsprechenden voreingestellten erwarteten Bandbreite entspricht.

5. Endgerät nach Anspruch 4, wobei das Prioritätenabrufmodul (41) insbesondere konfiguriert ist zum: Klassifizieren jedes Anwendungsprogramms gemäß einem Ausführungsstatus des Anwendungsprogramms, das auf dem Endgerät ausgeführt wird und eine Netzwerkressource belegt; und Bestimmen der Priorität jedes Anwendungsprogramms gemäß einer Zuordnungsbeziehung, die zwischen einer Anwendungsprogrammklassifizierung und einer Priorität besteht und in einer voreingestellten Prioritätsliste gespeichert ist.

6. Endgerät nach Anspruch 4 oder 5, wobei es sich bei der Netzwerkbandbreiten-Zuweisungsrichtlinie insbesondere handelt um: Zuweisen verschiedener Anteile von Netzwerkbandbreite zu Anwendungsprogrammen mit verschiedenen Prioritäten; und dementsprechend das Netzwerkbandbreiten-Zuweisungsmodul insbesondere konfiguriert ist zum: Bestimmen gemäß der Netzwerkbandbreiten-Zuweisungsrichtlinie eines Netzwerkbandbreiten-Zuweisungsanteils, welcher der Priorität eines jeden der Anwendungsprogramme entspricht; Teilen der gegenwärtig verfügbaren Netzwerkbandbreite gemäß dem Netzwerkbandbreiten-Zuweisungsanteil und Bestimmen eines Netzwerkbandbreiten-Zuweisungswerts, welcher der Priorität eines jeden der Anwendungsprogramme entspricht; und Zuweisen von Netzwerkbandbreite zum Anwendungsprogramm mit der entsprechenden Priorität gemäß dem Netzwerkbandbreiten-Zuweisungswert.

## Revendications

1. Procédé d'allocation de bande passante de réseau, comprenant de :
obtenir (301) une priorité de chaque programme d'application qui s'exécute sur un terminal et occupe une ressource de réseau ;
et
obtenir (302) la bande passante de réseau actuellement disponible du terminal ;
le procédé étant **caractérisé en ce qu'**il comprend de
allouer (303) la bande passante de réseau actuellement disponible aux programmes d'application s'exécutant sur le terminal dans l'ordre allant d'une priorité supérieure à une priorité inférieure conformément à une politique d'allocation de bande passante de réseau, et seulement lorsque la bande passante de réseau allouée à un programme d'application ayant une priorité supérieure satisfait une bande passante attendue prédéfinie correspondante, allouer la bande passante de réseau restante à un programme d'application ayant une priorité inférieure.

2. Procédé d'allocation de bande passante de réseau selon la revendication 1, dans lequel l'obtention (301) d'une priorité de chaque programme d'application qui s'exécute sur un terminal et occupe une ressource de réseau comprend spécifiquement de :
classer chaque programme d'application en fonction d'un état d'exécution du programme d'application qui s'exécute sur le terminal et occupe une ressource de réseau ; et
déterminer la priorité de chaque programme d'application en fonction d'une relation de mappage entre une classification de programme d'application et une priorité et
stockée dans une liste de priorités prédéfinie.

3. Procédé d'allocation de bande passante de réseau selon la revendication 1 ou 2, dans lequel la politique d'allocation de bande passante de réseau consiste spécifiquement à : allouer différentes proportions d'une bande passante de réseau à des programmes d'application ayant des priorités différentes ; et de manière correspondante, l'allocation de la bande passante de réseau actuellement disponible aux programmes d'application en fonction d'une politique d'allocation de bande passante de réseau du terminal et de la priorité du programme d'application comprend spécifiquement de :
déterminer, en fonction de la politique d'allocation de bande passante du réseau, une proportion d'allocation de bande passante de réseau correspondant à la priorité de chacun des programmes d'application ;
diviser la bande passante de réseau actuellement disponible en fonction de la proportion d'allocation de bande passante de réseau et déterminer une valeur d'allocation de bande passante de réseau correspondant à la priorité de chacun des programmes d'application ; et
allouer une bande passante de réseau au programme d'application ayant la priorité correspondante en fonction de la valeur d'allocation de bande passante de réseau.

4. Terminal, comprenant un module d'obtention de priorité, un module d'obtention de bande passante de réseau, et un module d'allocation de bande passante de réseau, dans lequel :
le module d'obtention de priorité (41) est configuré pour obtenir une priorité de chaque programme d'application qui s'exécute sur le terminal et occupe une ressource de réseau, et fournir les priorités au module d'allocation de bande passante de réseau ;
et
le module d'obtention de bande passante de réseau (42) est configuré pour obtenir la bande passante de réseau actuellement disponible du terminal, et fournir la bande passante de réseau actuellement disponible au module d'allocation de bande passante de réseau ;
le terminal étant **caractérisé en ce que**
le module d'allocation de bande passante de réseau (43) est configuré pour allouer la bande passante de réseau actuellement disponible aux programmes d'application s'exécutant sur le terminal dans l'ordre allant d'une priorité supérieure à une priorité inférieure conformément à une politique d'allocation de bande passante de réseau, et seulement lorsque la bande passante de réseau allouée à un programme d'application ayant une priorité supérieure satisfait une bande passante attendue prédéfinie correspondante, allouer la bande passante de réseau restante à un programme d'application ayant une priorité inférieure.

5. Terminal selon la revendication 4, dans lequel le module d'obtention de priorité (41) est spécifiquement configuré pour : classer chaque programme d'application en fonction d'un état d'exécution du programme d'application qui s'exécute sur le terminal et occupe une ressource de réseau ; et déterminer la priorité de chaque programme d'application en fonction d'une relation de mappage entre une classification de programme d'application et une priorité et stockée dans une liste de priorités prédéfinie.

6. Terminal selon la revendication 4 ou 5, dans lequel la politique d'allocation de bande passante de réseau consiste spécifiquement à : allouer différentes proportions d'une bande passante de réseau à des programmes d'application ayant des priorités différentes ; et de manière correspondante, le module d'allocation de bande passante de réseau est spécifiquement configuré pour : déterminer, en fonction de la politique d'allocation de bande passante de réseau, une proportion d'allocation de bande passante de réseau correspondant à la priorité de chacun des programmes d'application ; diviser la bande passante de réseau actuellement disponible en fonction de la proportion d'allocation de bande passante de réseau, et déterminer une valeur d'allocation de bande passante de réseau correspondant à la priorité de chacun des programmes d'application ; et allouer une bande passante de réseau au programme d'application ayant la priorité correspondante en fonction de la valeur d'allocation de bande passante de réseau.
